# EUROPÄISCHE PATENTSCHRIFT

(11) **EP 1 667 295 B1**
(45) Veröffentlichungstag und Bekanntmachung des Hinweises auf die Patenterteilung: **14.05.2008**
(21) Anmeldenummer: 05110970.0
(22) Anmeldetag: 18.11.2005
(51) Int. Cl.: H02B 11/133, H02B 11/127

(54) **Schaltvorrichtung mit Einschubrahmen und verriegelbarem Leistungsschalter**
Draw out type switch with locking mechanism for circuit breaker
Dispositif de commutation encastrable avec disjoncteur verouillable

(30) Priorität: 06.12.2004 DE 102004059095
(43) Veröffentlichungstag der Anmeldung: 07.06.2006
(73) Patentinhaber: SIEMENS AKTIENGESELLSCHAFT, 80333 München (DE)
(72) Erfinder: Dahl, Jörg-Uwe, 14542, Werder (DE); Kruschke, Michael, 16727, Schwante (DE); Liebetruth, Marc, 16548, Glienicke (DE)

(56) Entgegenhaltungen:
- DE-B3- 10 250 214

## Beschreibung

Die vorliegende Erfindung betrifft eine Schaltvorrichtung mit einem Einschubrahmen zur Anordnung in einer Schaltanlage, einem Leistungsschalter, der in den Einschubrahmen einschiebbar ist und im eingeschobenen Zustand eine Einschubstellung einnimmt, und eine Verriegelungseinrichtung zum Verriegeln des Leistungsschalters in dem Einschubrahmen.

Bei Schaltgeräten in Einschubausführung wird der Leistungsschalter in Betriebsstellung durch einen selbsthemmenden Verfahrmechanismus in dem dazugehörenden Einschubrahmen gehalten. Da die Anschlüsse des Leistungsschalters in der Regel an einer Seite angeordnet sind, ergibt sich bei einem eingeschalteten Leistungsschalter eine Stromschleife. Treten hohe Kurzschlussströme auf, so wirken die Kräfte der Stromschleife entgegen der Einfahrrichtung und versuchen damit, den Schalter aus dem Einschub zu treiben. Hält die Arretierung durch den Verfahrmechanismus den Kräften nicht Stand, so bewegt sich der Schalter unter Umständen weiter aus der Betriebsstellung als die Lamellenkontakte des Leistungsschalters in die Anschlussschiene des Einschubrahmens eingreifen. Dies führt zu einem Systemausfall.

Aus der Patentschrift DE 102 51 002 B3 ist ein gattungsgemäßer Leistungsschalter bekannt. Dabei wird eine Verriegelungseinrichtung von einem Schaltantrieb, insbesondere von einer Schaltwelle des Leistungsschalters, betätigt. Die Verriegelungseinrichtung umfasst ein auf der Schaltwelle drehfest angeordnetes Betätigungselement, das mit einem Verriegelungsbolzen zusammenwirkt. Der Verriegelungsbolzen ist axial verlagerbar angeordnet und durch Führungsrollen geführt. Dieser Verriegelungsmechanismus ist jedoch konstruktiv sehr aufwändig.

Eine weitere Möglichkeit, die Stromkräfte auf den Leistungsschalter zu reduzieren, ist die Verwendung von strombegrenzenden Leistungsschaltern, die den prospektiven Kurzschlussstrom und damit auch die auftretenden Stromschleifenkräfte begrenzen. Diese Geräte besitzen allerdings nur eine geringe Selektivität, d. h. sie können den Kurzschluss nur sehr kurz ertragen, so dass nachgeordnete Schalter in einer Stromverteilung nicht die Möglichkeit haben, vor dem Leistungsschalter abzuschalten.

Aus der Patentschrift DE 102 50 214 B3 ist eine Vorrichtung zur Fixierung eines Leistungsschalters in einem Einschubrahmen bekannt. Es ist mindestens ein dem Einschubrahmen zugeordnetes Arretierungsmittel für den Leistungsschalter vorgesehen, welches zur Verlagerung aus einer Verriegelungsposition in eine Entriegelungsposition bzw. umgekehrt mit einer am Einschubrahmen beweglich angeordneten Steuerstange verbunden ist. Die Steuerstange wirkt mit einem Mittel zum Bewegen des Leistungsschalters relativ zum Einschubrahmen zusammen. Außerdem ist ein Freigabemittel vorgesehen, welches mittels des Leistungsschalters von einer Sperrposition für die Steuerstange in eine Freigabeposition für die Steuerstange bzw. umgekehrt verlagerbar ist.

Die Aufgabe der vorliegenden Erfindung besteht somit darin, die Verriegelung eines Leistungsschalters in einem Einschubrahmen mit konstruktiv einfachen Maßnahmen zu verbessern.

Erfindungsgemäß wird diese Aufgabe gelöst durch eine Schaltvorrichtung mit einem Einschubrahmen zur Anordnung in einer Schaltanlage, einem Leistungsschalter, der in den Einschubrahmen einschiebbar ist und im eingeschobenen Zustand eine Einschubstellung einnimmt, und einer Verriegelungseinrichtung zum Verriegeln des Leistungsschalters in dem Einschubrahmen, indem ein Verriegelungsbolzen des Leistungsschalters an einem Lagerblech des Einschubrahmens anliegt und so ein Ausrücken entgegen der Einschubrichtung verhindert, wobei die Verriegelungseinrichtung eine erste Komponente, die an dem Einschubrahmen befestigt ist, und eine zweite Komponente, die an dem Leistungsschalter befestigt ist, aufweist, und die erste Komponente und die zweite Komponente in der Einschubstellung nicht miteinander in Eingriff stehen, jedoch in einer gegenüber der Einschubstellung um den Verriegelungsbolzen gedrehten Kippstellung des Leistungsschalters ineinander definiert eingreifen, so dass der Leistungsschalter in dem Einschubrahmen verriegelt ist.

Mit der erfindungsgemäßen Verriegelungseinrichtung wird damit das Kippen der Schaltvorrichtung nicht von vorne herein verhindert, sondern bewusst in engen Grenzen zugelassen. Das Kippen führt dann zum Verriegeln des Leistungsschalters in dem Einschubrahmen. Nach dem Unterbrechen des Kurzschlusses sinkt der Leistungsschalter wieder in seine übliche Betriebsstellung zurück oder kann in diese Stellung beim nächsten Ausfahrvorgang gedrückt werden, so dass er gegebenenfalls nach Beseitigung weiterer Verriegelungen aus dem Einschubrahmen entnommen werden kann.

Vorzugsweise weist die Verriegelungseinrichtung eine dritte Komponente an dem Einschubrahmen und eine vierte Komponente an dem Leistungsschalter auf, und die beiden Komponenten bilden in einem Verriegelungszustand ein Drehlager, um das der Leistungsschalter in die Kippstellung kippbar ist. Diese dritte und vierte Komponente sind üblicherweise als Bolzen und Lagerblech realisiert und dienen typischerweise zum Verriegeln des Leistungsschalters in dem Einschubrahmen in der Höhe einer Einschubschiene des Einschubrahmens.

Die erste Komponente der Verriegelungseinrichtung besitzt vorteilhafterweise von der zweiten Komponente beim Einschieben des Leistungsschalters in den Einschubrahmen einen vordefinierten Abstand in der zur Einschubrichtung senkrechten Richtung. Damit kann der Leistungsschalter ohne weiteres in den Einschubrahmen eingeführt bzw. von diesem entnommen werden. Dieser vordefinierte Abstand kann auch den Wert Null annehmen.

Die erste Komponente der Verriegelungseinrichtung kann z. B. als Querstrebe zwischen zwei gegenüberliegenden Wänden des Einschubrahmens realisiert sein. Damit liegt eine einfach montierbare und kostengünstige Verriegelungskomponente vor. Andere Befestigungen im Einschub sind denkbar.

Die zweite Komponente besitzt entsprechend einer besonders bevorzugten Ausgestaltung der vorliegenden Erfindung einen Haken, der die erste Komponente in der Kippstellung hintergreift. Wenn der Leistungsschalter in die normale Einschubstellung zurückgedreht wird, hintergreift der Haken die erste Komponente der Verriegelungseinrichtung auch nicht mehr.

In einer Weiterbildung weist die zweite Komponente einen sich in Einschubrichtung erstreckenden Mittelabschnitt und einen senkrecht dazu abstehenden Endabschnitt auf, wobei eine schräg verlaufende Rampe den Mittelabschnitt und den Endabschnitt verbindet. Diese schräg verlaufende Rampe begünstigt das Entnehmen des Leistungsschalters aus dem Einschubrahmen, wenn der Kurzschluss unterbrochen ist und der Leistungsschalter sich dennoch in der Kippstellung befindet.

Ein Fußabschnitt der zweiten Komponente, mit dem die zweite Komponente an dem Leistungsschalter befestigt ist, kann z. B. einen Vertikalanschluss des Leistungsschalters abstützen. Damit besitzt die zweite Komponente die doppelte Funktion des Abstützens und des Verriegelns im Kurzschlussfall.

Unter Umständen ist der Leistungsschalter drei- oder mehrpolig ausgestaltet und für mindestens einen Pol ist eine oben genannte Verriegelungseinrichtung am Leistungsschalter bzw. Einschubrahmen angebracht.

Die vorliegende Erfindung wird nun anhand der beigefügten Zeichnungen näher erläutert, in denen zeigen:
- FIG 1: eine perspektivische Ansicht eines Einschubrahmens und eines Leistungsschalters im ausgeschobenen Zustand;
- FIG 2: eine perspektivische Ansicht des Leistungsschalters in einem in den Einschubrahmen eingeschobenen Zustand;
- FIG 3: eine Seitenansicht des Leistungsschalters im eingeschobenen Zustand bei abgenommener Seitenwand des Einschubrahmens; und
- FIG 4: einen vergrößerten Ausschnitt von FIG 3.

Das nachfolgend näher geschilderte Ausführungsbeispiel stellt eine bevorzugte Ausführungsform der vorliegenden Erfindung dar.

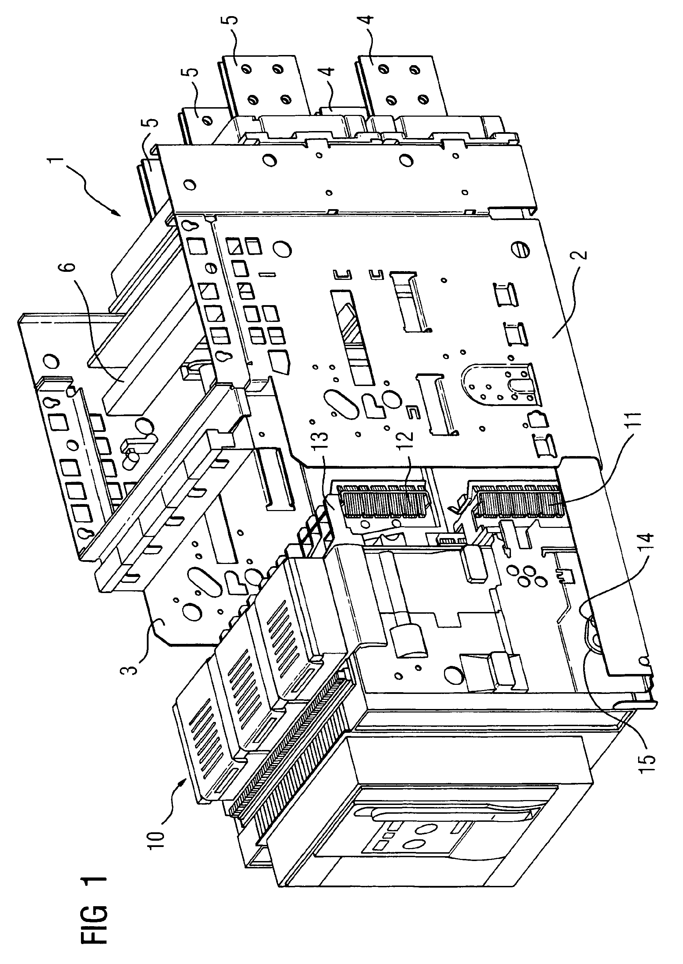

In FIG 1 ist eine erfindungsgemäße Schaltvorrichtung in perspektivischer Ansicht wiedergegeben. In der rechten Hälfte ist ein Einschubrahmen 1 mit zwei Seitenwänden 2 und 3 zu erkennen. An der Rückseite des Einschubrahmens sind Vertikalanschlüsse, die auch als Stromschienen bezeichnet werden, angeordnet. Der Strom fließt jeweils in einen unteren Vertikalanschluss 4 hinein und aus einem oberen Vertikalanschluss 5 heraus bzw. umgekehrt. Darüber hinaus sind die beiden Seitenwände 2 und 3 des Einschubrahmens 1 mit einer Querstrebe 6 verbunden. Im vorliegenden Fall besitzt die Querstrebe 6 ein rechteckförmiges Profil und besteht vorzugsweise aus einem Metall.

Auf der linken Seite von FIG 1 ist ein Leistungsschalter 10 zu erkennen, der entsprechende untere Lamellenblöcke 11 zur Kontaktierung der unteren Vertikalanschlüsse 4 und obere Lamellenblöcke 12 zur Kontaktierung der oberen Vertikalanschlüsse 5 besitzt. Oberhalb der oberen Lamellenblöcke 12 sind Arretierungen 13 vorgesehen, die doppelte Funktionalität besitzen. Zum einen stützen sie die oberen Lamellenblöcke 12 gegen ein Kippen nach oben ab. Darüber hinaus dienen sie zur Arretierung des Leistungsschalters 10 im Einschubrahmen 1 im Kurzschlussfall, wie dies unten näher erläutert wird.

Zur Verriegelung des Leistungsschalters 10 im Einschubrahmen 1 im eingeschobenen Zustand dient ein Verriegelungsbolzen 14, der mit einer Kurbel 15 bewegbar ist.

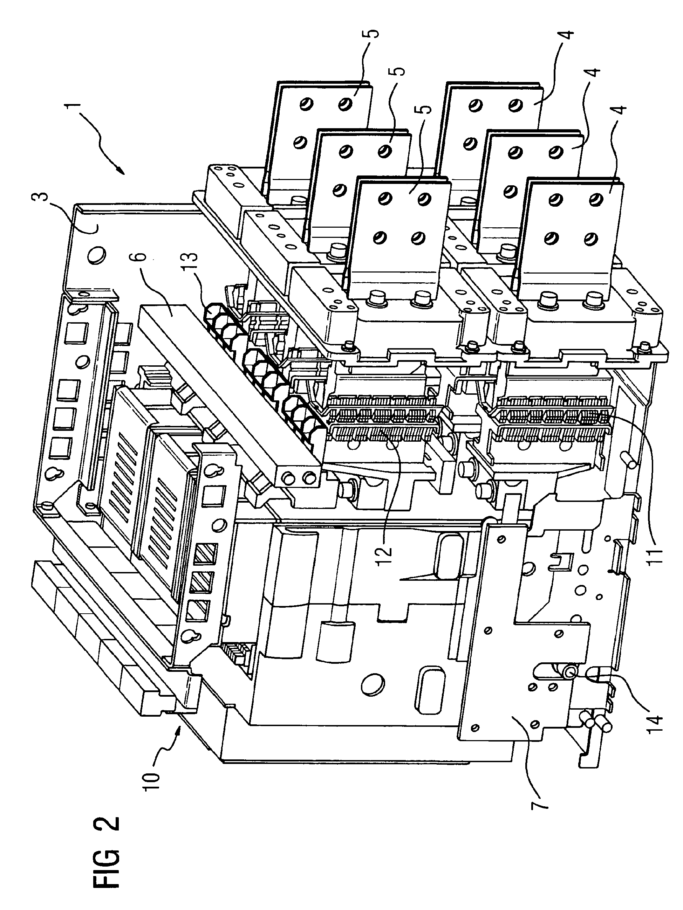

In FIG 2 ist der Leistungsschalter 10 in seinem in den Einschubrahmen 1 eingeschobenen Zustand dargestellt. Die vordere Seitenwand 2 des Einschubrahmens 1 ist in FIG 2 nicht eingezeichnet.

In dem eingeschobenen Zustand, d. h. in der Einschubstellung, kontaktieren die Lamellenblöcke 11 und 12 des Leistungsschalters 10 die jeweiligen Vertikalanschlüsse 4 und 5 des Einschubrahmens 1. Außerdem greift der Verriegelungsbolzen 14 im Verriegelungszustand in ein Lagerblech 7 des Einschubrahmens 1.

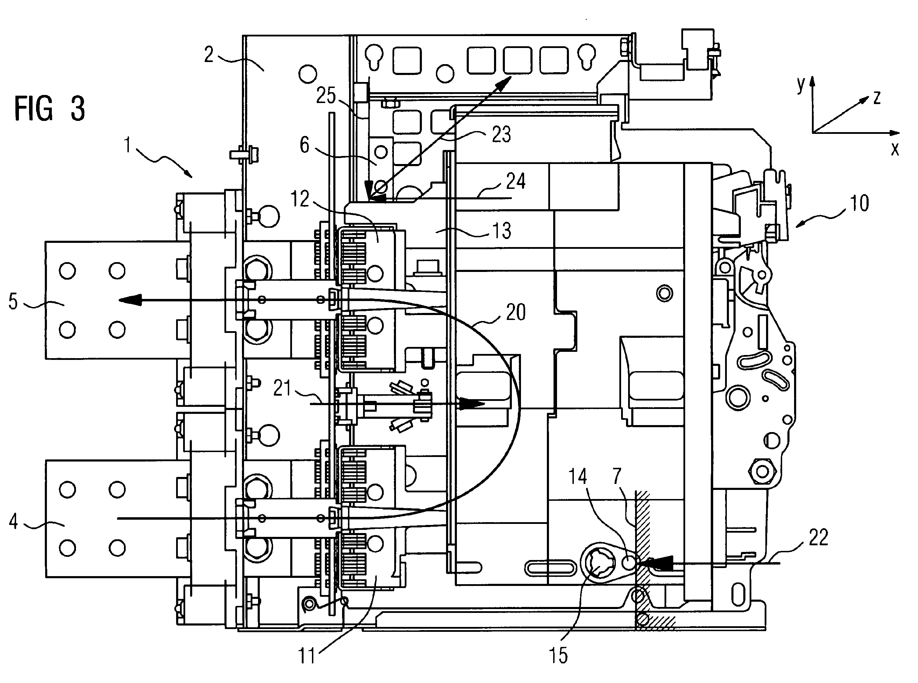

In FIG 3 ist der in den Einschubrahmen 1 eingeschobene Leistungsschalter 10 von FIG 2 in einer Seitenansicht dargestellt. Nachdem die Anordnung von der Rückseite bezogen auf die Darstellung von FIG 2 dargestellt ist, ist hier die Seitenwand 2, nicht aber die Seitenwand 3 des Einschubrahmens 1 eingezeichnet.

Zur Orientierung ist in FIG 3 ein kartesisches Koordinatensystem mit den Achsen x, y und z eingezeichnet. Dabei entspricht die x-y-Ebene der Zeichnungsebene.

Ist der Leistungsschalter 10 eingeschaltet, so ergibt sich ein Stromfluss von dem unteren Vertikalanschluss 4 durch den unteren Lamellenblock 11, den Leistungsschalter 10, den oberen Lamellenblock 12 zum oberen Vertikalanschluss 5. Dieser Stromfluss ist in FIG 3 durch die Stromschleife 20 dargestellt. Wechselstrombedingt fließt der Strom zeitweise in die entgegengesetzte Richtung. Dabei ist eine Einspeisung von "oben" und "unten" möglich.

Die Stromschleife 20 führt zu einer Stromschleifenkraft 21, die den Leistungsschalter 10 aus dem Einschubrahmen 1 zu drängen versucht. Um ein Ausrücken des Leistungsschalters 10 aus dem Einschubrahmen 1 zu verhindern, liegt der Verriegelungsbolzen 14 des Leistungsschalters 10 an dem Lagerblech 7 des Einschubrahmens 1 an. Das Lagerblech 7 ist hier lediglich symbolisch angedeutet. Durch die Verriegelung bringt das Lagerblech 7 eine Lagerkraft 22 auf.

Die geometrische Anordnung der Stromschleifenkraft 21 zu der Lagerkraft 22, die der Einschubrahmen 1 gegenüber dem Schalter 10 aufbringt, bewirkt eine resultierende Kraft, die es abzustützen gilt. Liegen die Kräfte beispielsweise auf einer Ebene mit gleichem y-Wert, so entsteht kein Drehmoment auf den Schalter um die z-Achse. Dies wäre der Fall, wenn die Lagerkraft 22 in der Höhe (y-Richtung) der Stromschleifenkraft 21 angeordnet wäre. In diesem Fall muss die Lagerung aber die resultierende Gesamtkraft aufnehmen können.

Üblicherweise liegen die Kräfte jedoch nicht in einer Ebene, da dies unter Bezugnahme aller erforderlichen Baugruppen außerordentlich schwer zu erreichen ist. Insbesondere ist es aus konstruktiven Gründen günstig, den Verriegelungsmechanismus mit dem Verriegelungsbolzen 14 in der Nähe der Einschubschiene 8 zu platzieren, da dort auch die Kurbel des Ein- und Ausfahrmechanismus für den Leistungsschalter 10 angeordnet ist.

Wenn sich nun die Stromschleifenkraft 21 und die Lagerkraft 22 (beide in x-Richtung) nicht auf gleicher y-Höhe befinden, folgt bei einem Kurzschlussstrom ein Kippen des Schalters 10 um den Lagerbolzen 14 entsprechend dem Bewegungspfeil 23. Da eine diesbezügliche, größere Bewegung zu verhindern ist, muss eine zweite Lagerung die entsprechenden Kräfte abfangen. Diese zweite Lagerung kann (nicht in FIG 3 dargestellt) beispielsweise von dem Einfahrantrieb gesteuert werden. Eine derartige Lagerung mit beweglichen Teilen ist jedoch kostenaufwändig.

Erfindungsgemäß wird daher eine kostengünstige Lagerung mit der Querstrebe 6, die an dem Einschubrahmen 1 befestigt ist, und der Arretierung 13, die an dem Leistungsschalter 10 befestigt ist, vorgeschlagen. Entsprechend dieser Lösung werden keine beweglichen Teile und somit auch keine Steuerung benötigt. Im Falle eines Kurzschlusses fängt die Querstrebe 6 die auftretenden Kräfte nach einer definierten Kippbewegung des Leistungsschalters 10 ab. Dies bedeutet, dass die Querstrebe 6 die zusätzlichen Lagerkräfte 24 und 25 aufbringt, die in x-Richtung und y-Richtung wirken.

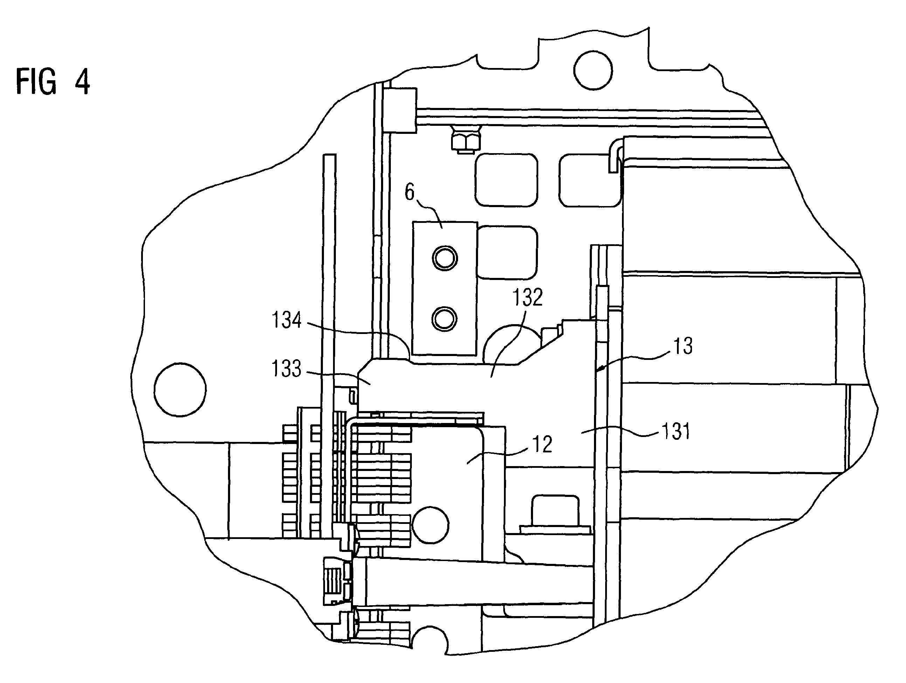

In FIG 4 ist der zusätzliche Verriegelungsmechanismus zum Begrenzen der Kippbewegung vergrößert dargestellt. Im Profil betrachtet besitzt die Arretierung 13 einen Fußabschnitt 131, einen sich hauptsächlich in Einschubrichtung (x-Richtung) erstreckenden Mittelabschnitt 132 und einen Endabschnitt 133. Der Endabschnitt 133 steht in y-Richtung etwas über den Mittelabschnitt 132 hinaus, so dass die Arretierung 13 eine hakenförmige Gestalt besitzt. Der Endabschnitt 133 und der Mittelabschnitt 132 sind mit einer schräg verlaufenden Rampe 134 verbunden.

Wie auch FIG 4 zu entnehmen ist, besitzt die Arretierung 13 doppelte Funktionalität. Zum einen stützt ihr Fußabschnitt 131 den oberen Lamellenblock 12 gegen eine Kippbewegung relativ zum Schalter 10 im Uhrzeigersinn ab, die durch eine Kraft hervorgerufen würde, welche durch die in den Vertikalanschlüssen fließenden Ströme verursacht wird. Zum anderen dient die Arretierung 13 zum Begrenzen einer Kippbewegung des gesamten Schalters 10 im Falle eines Kurzschlussstroms, da sie mit dem Schalter 10 beim Einfahren unter die Querstrebe 6 des Einschubrahmens verfährt und bei der Kippbewegung die Querstrebe 6 hintergreift. Durch den in y-Richtung über den Mittelabschnitt 132 hinausragenden Endabschnitt 133, mit dem das Hintergreifen der Querstrebe 6 möglich wird, wird die Kraftkomponente, die eine horizontale Bewegung bewirkt, abgefangen.

Die Rampe 134 dient als Arretierungsfläche beim Kurzschluss sowie nach dem Unterbrechen des Kurzschlussstroms dazu, den Leistungsschalter 10 leichter aus dem Einschubrahmen 1 entnehmen zu können. Entweder sinkt der Leistungsschalter 10 bei Unterbrechung des Kurzschlusses durch das Eigengewicht wieder nach unten, so dass sich der Endabschnitt 133 unterhalb der Querstrebe 6 befindet, oder aber er lässt sich begünstigt durch die Rampe 134 ohne weiteres nach unten drücken. Damit ist ein Ausfahren des Leistungsschalters 10 in jedem Fall möglich.

Die Querstrebe 6 und die korrespondierende Arretierung 13 sind in der Nähe der Stromschiene 5 angeordnet. Dies ist insofern vorteilhaft, da die Stromschleifenkräfte dort abgefangen werden, wo sie in den Schalter eingeleitet werden. Die zusätzliche Lagerung bzw. Begrenzung der Kippbewegung kann grundsätzlich auch an einer anderen Stelle im Einschubrahmen 1 erfolgen.

Anstelle der Formgebung der Arretierung 13 mit einer Rampe 134 wäre es auch möglich, dort einen entsprechenden Radius vorzusehen. Wesentlich dabei ist lediglich, dass eine spätere Entnahme des Leistungsschalters 10 aus dem Einschubrahmen 1 möglich ist.

### Bezugszeichenliste

- 1: Einschubrahmen
- 2, 3: Seitenwände
- 4: untere Vertikalanschlüsse
- 5: obere Vertikalanschlüsse
- 6: Querstrebe
- 7: Lagerblech
- 10: Leistungsschalter
- 11: untere Lamellenblöcke
- 12: obere Lamellenblöcke
- 13: Arretierungen
- 14: Verriegelungsbolzen
- 15: Kurbel
- 20: Stromschleife
- 21: Stromschleifenkraft
- 22, 24, 25: Lagerkräfte
- 23: Bewegungspfeil
- 131: Fußabschnitt
- 132: Mittelabschnitt
- 133: Endabschnitt
- 134: Rampe

## Patentansprüche

1. Schaltvorrichtung mit
- einem Einschubrahmen (1) zur Anordnung in einer Schaltanlage,
- einem Leistungsschalter (10), der in den Einschubrahmen (1) einschiebbar ist und im eingeschobenen Zustand eine Einschubstellung einnimmt, und
- einer Verriegelungseinrichtung zum Verriegeln des Leistungsschalters (10) in dem Einschubrahmen (1), indem ein Verriegelungsbolzen (14) des Leistungsschalters (10) an einem Lagerblech (7) des Einschubrahmens (1) anliegt und so ein Ausrücken entgegen der Einschubrichtung verhindert, und weiter indem die Verriegelungseinrichtung eine erste Komponente (6), die an dem Einschubrahmen (1) befestigt ist, und eine zweite Komponente (13), die an dem Leistungsschalter (10) befestigt ist, aufweist, und indem
die erste Komponente (6) und die zweite Komponente (13) in einer gegenüber der Einschubstellung um den Verriegelungsbolzen (14) gedrehten Kippstellung des Leistungsschalters (10) ineinander definiert eingreifen, so dass der Leistungsschalter (10) in dem Einschubrahmen (1) verriegelt ist, **dadurch gekennzeichnet dass** die erste Komponente und die zweite Komponente in der Einschubstellung nicht miteinander in Eingriff stehen.

2. Schaltvorrichtung nach Anspruch 1, wobei die Verriegelungseinrichtung eine dritte Komponente (7) an dem Einschubrahmen (1) und eine vierte Komponente (14) an dem Leistungsschalter (10) aufweist und die beiden Komponenten in einem Verriegelungszustand ein Drehlager bilden, um das der Leistungsschalter (10) in die Kippstellung kippbar ist.

3. Schaltvorrichtung nach Anspruch 1 oder 2, wobei die erste Komponente (6) von der zweiten Komponente (13) beim Einschieben des Leistungsschalters (10) in den Einschubrahmen (1) einen vordefinierten Abstand in der zur Einschubrichtung (x) senkrechten Richtung (y) besitzt.

4. Schaltvorrichtung nach einem der vorhergehenden Ansprüche, wobei die erste Komponente (6) der Verriegelungseinrichtung als Querstrebe zwischen zwei gegenüberliegenden Wänden (2, 3) des Einschubrahmens (1) montiert ist.

5. Schaltvorrichtung nach einem der vorhergehenden Ansprüche, wobei die zweite Komponente (13) einen Haken aufweist, der die erste Komponente (6) in der Kippstellung hintergreift.

6. Schaltvorrichtung nach Anspruch 5, wobei die zweite Komponente (13) einen sich in Einschubrichtung (x) erstreckenden Mittelabschnitt (132) und einen senkrecht dazu abstehenden Endabschnitt (133) aufweist, und eine schräg verlaufende Rampe (134) den Mittelabschnitt (132) und den Endabschnitt (133) verbindet.

7. Schaltvorrichtung nach einem der vorhergehenden Ansprüche, wobei ein Fußabschnitt (131) der zweiten Komponente (13), mit dem die zweite Komponente an den Leistungsschalter (10) befestigt ist, einen Vertikalanschluss (12) des Leistungsschalters abstützt.

8. Schaltvorrichtung nach einem der vorhergehenden Ansprüche, wobei der Leistungsschalter drei- oder mehrpolig ausgestaltet ist und für mindestens einen Pol eine genannte Verriegelungseinrichtung am Leistungsschalter und Einschubrahmen angebracht ist.

## Claims

1. Switching apparatus having
- a withdrawable-part rack (1) for arrangement in a switchgear assembly,
- a power breaker (10) which can be inserted into the withdrawable-part rack (1) and assumes an inserted position in the inserted state, and
- a locking device for the purpose of locking the power breaker (10) in the withdrawable-part rack (1), by a locking bolt (14) of the power breaker (10) bearing against a bearing plate (7) of the withdrawable-part rack (1) and therefore preventing a disengagement counter to the insertion direction, and furthermore by the locking device having a first component (6), which is fixed to the withdrawable-part rack (1), and a second component (13), which is fixed to the power breaker (10), and by the first component (6) and the second component (13) engaging with one another in a defined manner in a tilted position of the power breaker (10), which position is rotated about the locking bolt (14) with respect to the inserted position, with the result that the power breaker (10) is locked in the withdrawable-part rack (1), **characterized in that** the first component and the second component do not engage with one another in the inserted position.

2. Switching apparatus according to Claim 1, the locking device having a third component (7) on the withdrawable-part rack (1) and a fourth component (14) on the power breaker (10), and the two components forming a rotary bearing in a locked state, it being possible for the power breaker (10) to be tilted about this rotary bearing into the tilted position.

3. Switching apparatus according to Claim 1 or 2, the first component (6) having a predefined distance from the second component (13) in the direction (y) perpendicular to the insertion direction (x) when the power breaker (10) is inserted into the withdrawable-part rack (1).

4. Switching apparatus according to one of the preceding claims, the first component (6) of the locking device being mounted as a transverse strut between two opposing walls (2, 3) of the withdrawable-part rack (1).

5. Switching apparatus according to one of the preceding claims, the second component (13) having a hook which engages behind the first component (6) in the tilted position.

6. Switching apparatus according to Claim 5, the second component (13) having a central section (132), which extends in the insertion direction (x), and an end section (133) protruding perpendicularly thereto, and a ramp (134) extending at an angle connecting the central section (132) and the end section (133).

7. Switching apparatus according to one of the preceding claims, a foot section (131) of the second component (13), by means of which the second component is fixed to the power breaker (10), supporting a vertical connection (12) of the power breaker.

8. Switching apparatus according to one of the preceding claims, the power breaker being of three-pole or multipole design, and a mentioned locking device being fitted to the power breaker and withdrawable-part rack for at least one pole.

## Revendications

1. Dispositif de commutation comprenant
- un châssis de rack (1) à monter dans une installation de commutation,
- un disjoncteur (10) qui peut être inséré dans le châssis de rack (1) et qui, lorsqu'il est inséré, prend une position d'insertion, et
- un dispositif de verrouillage pour verrouiller le disjoncteur (10) dans le châssis de rack (1), un axe de verrouillage (14) du disjoncteur (10) étant appliqué contre une plaque support (7) du châssis de rack (1) si bien qu'un désengagement dans le sens contraire au sens d'insertion est empêché, et le dispositif de verrouillage ayant, en outre, un premier composant (6) fixé au châssis de rack (1) et un deuxième composant (13) fixé au disjoncteur (10), le premier composant (6) et le deuxième composant (13) venant en prise l'un avec l'autre de façon définie lorsque le disjoncteur (10) est dans une position de basculement par rapport à la position d'insertion, en tournant autour de l'axe de verrouillage (14), de manière à ce que le disjoncteur (10) soit verrouillé dans le châssis de rack (1), **caractérisé en ce que**, dans la position d'insertion, le premier composant et le deuxième composant ne sont pas en prise l'un avec l'autre.

2. Dispositif de commutation selon la revendication 1, dans lequel le dispositif de verrouillage a un troisième composant (7) situé sur le châssis de rack (1) et un quatrième composant (14) situé sur le disjoncteur (10) et les deux composants forment, dans un état de verrouillage, un palier de rotation autour duquel le disjoncteur (10) peut basculer dans la position de basculement.

3. Dispositif de commutation selon la revendication 1 ou 2, dans lequel le premier composant (6) a une distance prédéfinie par rapport au deuxième composant (13) lors de l'insertion du disjoncteur (10) dans le châssis de rack (1), dans la direction (y) perpendiculaire par rapport au sens d'insertion (x).

4. Dispositif de commutation selon l'une des revendications précédentes, dans lequel le premier composant (6) du dispositif de verrouillage est monté sous la forme d'une entretoise entre deux parois (2, 3) opposées du châssis de rack (1).

5. Dispositif de commutation selon l'une des revendications précédentes, dans lequel le deuxième composant (13) a un crochet qui, dans la position de basculement, vient en prise avec le premier composant (6), par l'arrière.

6. Dispositif de commutation selon la revendication 5, dans lequel le deuxième composant (13) a une partie médiane (132) s'étendant dans le sens d'insertion (x) et une partie terminale (133) faisant saillie perpendiculairement par rapport à la partie médiane, et une rampe (134) oblique relie la partie médiane (132) et la partie terminale (133).

7. Dispositif de commutation selon l'une des revendications précédentes, dans lequel une partie de pied (131) du deuxième composant (13), qui a pour effet de fixer le deuxième composant au disjoncteur (10), soutient un connecteur vertical du disjoncteur.

8. Dispositif de commutation selon l'une des revendications précédentes, dans lequel le disjoncteur a une configuration tripolaire ou multipolaire et, pour au moins un pôle, un dispositif de verrouillage précité est installé sur le disjoncteur et le châssis de rack.
